# FASCICULE DE BREVET EUROPEEN

(11) **EP 2 080 666 B1**
(45) Date de publication et mention de la délivrance du brevet: **01.12.2010**
(21) Numéro de dépôt: 09150293.0
(22) Date de dépôt: 09.01.2009
(51) Int. Cl.: B60Q 1/04, B60R 21/34

(54) **Bloc avant de véhicule automobile avec projecteur auto-centré**
Vorderblock eines Kraftfahrzeugs mit selbstzentrierendem Scheinwerfer
Front block of an automobile with self-centring headlight

(30) Priorité: 21.01.2008 FR 0850353
(43) Date de publication de la demande: 22.07.2009
(73) Titulaire: Faurecia Bloc Avant, 92000 Nanterre (FR)
(72) Inventeur: Gonin, Vincent, 25600, SOCHAUX (FR); Riviere, Caroline, 15320 Faverolles (FR)
(74) Mandataire: Blot, Philippe Robert Emile

(56) Documents cités:
- FR-A- 2 844 755
- FR-A- 2 893 902

## Description

La présente invention concerne en général un bloc avant de véhicule automobile.

Plus précisément, l'invention concerne un bloc avant du type comprenant :
- un projecteur muni d'une glace ;
- un élément de structure ;
- un élément de carrosserie dans lequel est ménagé une ouverture prévue pour recevoir la glace du projecteur ;
- des moyens pour centrer et maintenir en position le projecteur par rapport à l'élément de carrosserie.

La publication FR-A-2 844 755 divulgue un bloc avant d'après le préamble de la revendication 1.

On connaît de WO-A-2007/006 888 un bloc avant dont les moyens pour centrer et maintenir en position le projecteur par rapport à l'élément de carrosserie comportent un bras de support. Le bras est rigidement fixé par une extrémité à une traverse du bloc avant, et par l'extrémité opposée à l'aile du véhicule. Dans un tel bloc avant, les projecteurs et leurs moyens de maintien en position constituent des points durs, particulièrement dangereux en cas de choc piéton de type hanche.

Dans ce contexte, l'invention vise à proposer un bloc avant permettant de garantir une meilleure sécurité pour les piétons.

A cette fin, l'invention porte sur un bloc avant du type précité, **caractérisé en ce que** les moyens pour centrer et maintenir en position le projecteur par rapport à l'élément de carrosserie comprennent un bras flexible rigidement fixé seulement à l'élément de structure et au projecteur, le projecteur étant rigidement fixé seulement au bras flexible, le bras flexible étant apte à solliciter le projecteur contre une zone d'appui de l'élément de carrosserie.

Le bloc avant peut également présenter une ou plusieurs des caractéristiques ci-dessous, considérées individuellement ou selon toutes les combinaisons techniquement possibles :
- la zone d'appui est un bord de l'ouverture, le bord de l'ouverture et le projecteur étant aptes à coopérer en vue d'assurer le centrage du projecteur par rapport à l'élément de carrosserie sous l'effet de la sollicitation appliquée par le bras flexible au projecteur ;
- l'élément de carrosserie est une aile du véhicule ;
- l'ouverture est délimitée par un bord à contour fermé et est entièrement ménagée dans l'élément de carrosserie ;
- l'élément de structure est une traverse ; et
- le bras flexible est apte à solliciter le projecteur contre la zone d'appui de l'élément de carrosserie avec une force comprise entre 5 et 50 newtons.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective d'un bloc avant conforme à l'invention ; et
- la figure 2 est une vue en coupe du bloc avant de la figure 1, considérée suivant l'incidence des flèches II-II.

Dans la description qui va suivre, l'avant, l'arrière, la droite et la gauche, les directions longitudinales et transversales seront entendues relativement au sens de déplacement normal du véhicule.

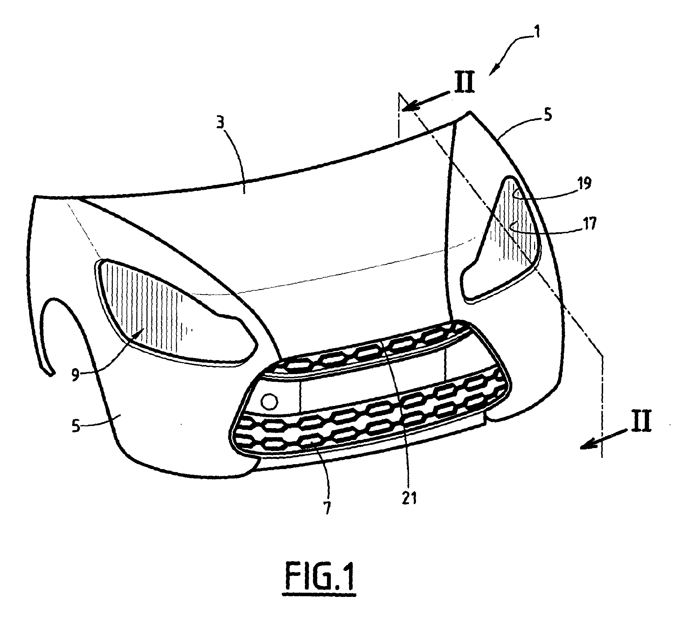

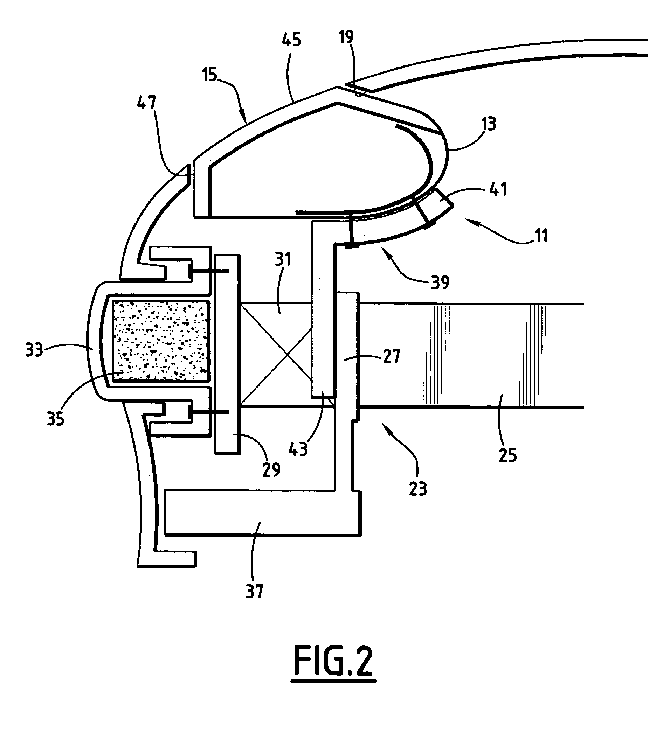

Le bloc avant 1 représenté sur la figure 1 comporte un capot 3, deux ailes 5 disposées à droite et à gauche du capot 3, une calandre 7, des projecteurs 9 et des moyens 11 pour centrer et maintenir en position chaque projecteur par rapport aux ailes 5. Les moyens 11 sont visibles sur la figure 2.

Comme le montre la figure 2, chaque projecteur comporte un boîtier 13 présentant un orifice s'ouvrant vers l'avant, une glace 15 solidaire du boîtier, ainsi qu'une ou plusieurs sources lumineuses (non représentées) disposées à l'intérieur du boîtier 13. La glace 15 ferme l'orifice du boîtier 13.

Chacune des deux ailes 5 comporte une ouverture 17 prévue pour recevoir la glace 15 d'un des projecteurs. Chacune des ouvertures 17 est délimitée par un bord périphérique 19 à contour fermé. Chaque ouverture 17 est entièrement ménagée dans l'aile 5 correspondante.

La calandre 7 est disposée verticalement sous le bord avant 21 du capot. Elle s'étend d'une aile 5 à l'autre.

Le bloc avant 1 comporte par ailleurs une face avant 23, visible sur la figure 2. La face avant 23 comporte une structure rigide de support et une pluralité d'équipements rigidement fixés sur cette structure. Parmi ces équipements figurent notamment le radiateur du circuit de refroidissement du moteur, un groupe moto-ventilateur apte à créer une convexion forcée d'air au contact du radiateur, le klaxon, un ou plusieurs capteurs d'aide au stationnement, des éléments du circuit de ventilation et de climatisation de l'habitacle du véhicule, etc. La face avant 23 est prévue pour être fixée sur les deux longerons 25 du véhicule.

La structure rigide comporte notamment une traverse transversale 27 présentant deux parties d'extrémités opposées, rigidement fixées aux deux longerons droit et gauche du véhicule. Elle comporte également une poutre de pare-chocs 29 transversale disposée à l'avant de la traverse 27, et des absorbeurs de chocs 31 de type « réparabilité interposés longitudinalement entre la traverse 27 et la poutre 29. Les absorbeurs de chocs « réparabilité » sont prévus pour amortir des chocs sur un autre véhicule à vitesse moyenne, c'est-à-dire à une vitesse d'environ 16 kilomètres par heure.

La face avant comporte également un absorbeur 33 adapté pour amortir les chocs piétons de type jambes L'absorbeur de chocs 33 est un profilé creux en matière plastique, s'étendant transversalement. Cet absorbeur est rigidement fixé sur une face de la poutre de pare-chocs 29 tournée vers l'avant. La face avant peut éventuellement comporter une barre 35 de mousse de matière plastique logée à l'intérieur de l'absorbeur de chocs 33.

La face avant 23 comprend également un autre absorbeur 37 prévu pour amortir les chocs piétons du type jambes, solidaire de la traverse 27. Cet absorbeur dit « voie basse » présente la forme d'un plateau sensiblement horizontal, réalisé typiquement en mousse de matériau plastique. Il est situé sous la poutre de pare-chocs.

Comme le montre la figure 2, les moyens 11 pour centrer et maintenir en position chaque projecteur 9 par rapport à l'aile 5 correspondante comprennent un bras flexible 39 rigidement fixé seulement au projecteur 9 et à un élément de structure du véhicule. Le bras 39 est rigidement fixé par une première partie d'extrémité 41 au boîtier 13 du projecteur. Il est rigidement fixé par une seconde partie d'extrémité 43 à la traverse 27 de la face avant. Le bras 39 est fixé à un seul point du bloc avant. Il n'est pas rigidement fixé à l'aile, ni à aucun autre élément du bloc avant.

Par ailleurs, le boîtier de projecteur est rigidement fixé seulement au bras flexible 39. Le projecteur n'est pas rigidement fixé à l'aile, ni à aucun autre élément du bloc avant.

Le bras flexible 39 est conformé de manière à solliciter le projecteur 9 contre une zone d'appui de l'aile 5.

De préférence, la zone d'appui est le bord périphérique 19 de l'ouverture. Le bord 19 est par exemple biseauté, dans un sens tel que la section de l'ouverture 17 augmente quand on passe de l'extérieur à l'intérieur de l'aile.

La glace 15 présente une face visible 45 destinée à s'inscrire dans l'ouverture 17, entourée par une zone de portée 47. La zone de portée 47 présente une forme conjuguée de celle du bord périphérique 19 et est destinée à venir en appui contre le bord biseauté 19 sous l'effet de la sollicitation appliquée par le bras 39. La force avec laquelle le boîtier est appuyé sur le bord périphérique 19 par le bras 39 est comprise entre 5 et 50 newton, et de préférence comprise entre 20 et 30 newton.

Le bras 39 est réalisé en une matière plastique, ou en une matière métallique, ou comprend une âme métallique et une matière plastique surmoulée sur l'âme métallique. La flexibilité du bras 39 est choisie de telle sorte que, en cas de choc piéton, quand, par exemple, la hanche du piéton vient heurter le projecteur, le bras se plie élastiquement et/ou plastiquement sous l'effet du choc. Ainsi, le projecteur tend à s'enfoncer et ne constitue plus un point dur pouvant blesser le piéton.

Le bloc avant décrit ci-dessus présente de multiples avantages.

Du fait que les moyens pour centrer et maintenir en position le projecteur par rapport à l'élément de carrosserie comprennent un bras flexible rigidement fixé seulement à l'élément de structure et au projecteur, le projecteur étant rigidement fixé seulement au bras flexible, le bras flexible étant apte à solliciter le projecteur contre une zone d'appui de l'élément de carrosserie, le projecteur ne constitue plus un point dur en cas de choc piéton, comme indiqué ci-dessus.

Par ailleurs, le bord de l'ouverture et le projecteur coopèrent de manière à assurer le centrage du projecteur par rapport à l'aile de manière très simple, sous l'effet de la sollicitation appliquée par le bras flexible au projecteur. Le projecteur est pour ainsi dire auto centré.

De plus, quand l'aile est réalisée dans un matériau présentant une certaine flexibilité, par exemple en un métal souple ou dans une matière plastique technique connue sous le nom de Xenoy ou Noryl ou encore en polypropylène, le projecteur contribue à maintenir en position l'aile par rapport aux pièces avoisinantes (capot, ouvrant, calandre). Le projecteur contribue également à conférer à l'aile un galbe, du fait de l'effort exercé par le bras élastique et transmis par le projecteur.

Les jeux et affleurements entre l'aile et la glace du projecteur sont considérablement améliorés du fait que le projecteur et l'aile s'auto centrent automatiquement l'un par rapport à l'autre. Il est ainsi possible de supprimer de nombreux accessoires onéreux et complexes qui sont normalement utilisés pour améliorer les jeux et affleurements. Le bord de l'ouverture et le projecteur coopèrent pour ajuster le niveau de la glace du projecteur par rapport à l'aile, de telle sorte que la glace affleure dans le prolongement de l'aile. De la même façon, le bord de l'ouverture et le projecteur coopèrent pour obtenir un contact avec un jeu minimum entre ledit bord et la glace.

Le bloc avant décrit ci-dessus peut présenter de multiples variantes.

Le bras flexible peut ne pas être rigidement fixé à la traverse 27 mais à un autre élément de structure du véhicule. Il peut par exemple être fixé à la poutre de pare-chocs 29. L'élément de carrosserie n'est pas nécessairement une aile mais pourrait être tout autre élément de la carrosserie du véhicule.

Dans une variante non préférée, la zone d'appui contre laquelle le projecteur vient porter sous l'effet de la sollicitation et du bras flexible n'est pas le bord périphérique de l'ouverture, mais est une autre zone de l'élément de carrosserie. Cette autre zone peut être située à distance de l'ouverture 17. Elle peut être constituée d'une surface continue ou de plusieurs surfaces discrètes et éloignées les unes des autres.

L'ouverture prévue pour recevoir la glace du projecteur peut ne pas être ménagée entièrement dans un même élément de carrosserie, typiquement dans l'aile. Elle peut être ménagée essentiellement dans l'aile et, pour une faible partie, par exemple dans le capot.

## Revendications

1. Bloc avant de véhicule automobile, le bloc avant (1) comprenant :
- un projecteur (9) muni d'une glace (15) ;
- un élément de structure (27) ;
- un élément de carrosserie (5) dans lequel est ménagé une ouverture (17) prévue pour recevoir la glace (15) du projecteur (9) ;
- des moyens (11) pour centrer et maintenir en position le projecteur (9) par rapport à l'élément de carrosserie (5) ;
**caractérisé en ce que** les moyens (11) pour centrer et maintenir en position le projecteur (9) par rapport à l'élément de carrosserie (5) comprennent un bras flexible (39) rigidement fixé seulement à l'élément de structure (27) et au projecteur (9), le projecteur (9) étant rigidement fixé seulement au bras flexible (39), le bras flexible (39) étant apte à solliciter le projecteur (9) contre une zone d'appui (19) de l'élément de carrosserie (5).

2. Bloc avant selon la revendication 1, **caractérisé en ce que** la zone d'appui (19) est un bord de l'ouverture (17), le bord (19) de l'ouverture (17) et le projecteur (9) étant aptes à coopérer en vue d'assurer le centrage du projecteur (9) par rapport à l'élément de carrosserie (5) sous l'effet de la sollicitation appliquée par le bras flexible (39) au projecteur (9).

3. Bloc avant selon la revendication 1 ou 2, **caractérisé en ce que** l'élément de carrosserie (5) est une aile du véhicule.

4. Bloc avant selon la revendication 3, **caractérisé en ce que** l'ouverture (17) est délimitée par un bord (19) à contour fermé et est entièrement ménagée dans l'élément de carrosserie (5).

5. Bloc avant selon l'une quelconque des revendications 1 à 4, **caractérisé en ce que** l'élément de structure (27) est une traverse.

6. Bloc avant selon l'une quelconque des revendications 1 à 5, **caractérisé en ce que** le bras flexible (39) est apte à solliciter le projecteur (9) contre la zone d'appui (19) de l'élément de carrosserie (5) avec une force comprise entre 5 et 50 newtons.

## Claims

1. Front block of an automotive vehicle, which front block (1) comprises:
- a headlamp (9) fitted with a glass plate (15);
- a structure element (27);
- a body element (5) in which an orifice (17) for receiving the glass plate (15) of the headlamp (9) is provided;
- means (11) for centring and holding the headlamp (9) in position relative to the body element (5); and holding
**characterised in that** the means (11) for centring and holding the headlamp (9) in position relative to the body element (5) comprise a flexible arm (39) rigidly secured to only the structure element (27) and to the headlamp (9), the headlamp (9) being rigidly secured to the flexible arm only (39), the flexible arm (39) being designed to bias the headlamp (9) against a support zone (19) on the body element (5).

2. Front block as claimed in claim 1, **characterised in that** the support zone (19) is an edge of the orifice (17), the edge (19) of the orifice (17) and the headlamp (9) being designed to co-operate to ensure that the headlamp (9) is centred relative to the body element (5) due to the biasing action of the flexible arm (39) applied to the headlamp (9).

3. Front block as claimed in claim 1 or 2, **characterised in that** the body element (5) is a wing of the vehicle.

4. Front block as claimed in claim 3, **characterised in that** the orifice (17) is bounded by an edge (19) with a closed contour and is incorporated entirely within the body element (5).

5. Front block as claimed in any one of claims 1 to 4, **characterised in that** the structure element (27) is a cross-member.

6. Front block as claimed in any one of claims 1 to 5, **characterised in that** the flexible arm (39) is designed to bias the headlamp (9) against the support zone (19) of the body element (5) with a force of between 5 and 50 newtons.

## Patentansprüche

1. Vorderbaugruppe für Kraftfahrzeug, wobei die Vorderbaugruppe (1) umfasst:
- einen Scheinwerfer (9), der mit einer Glasscheibe (15) versehen ist;
- ein Strukturelement (27);
- einen Karosserieelement (5), in dem eine Öffnung (17) ausgebildet ist, die dazu vorgesehen ist, die Glasscheibe (15) des Scheinwerfers (9) aufzunehmen;
- Mittel (11), um den Scheinwerfer (9) in Bezug auf das Karosserieelement (5) zu zentrieren und an seiner Position zu halten;
**dadurch gekennzeichnet, dass** die Mittel (11), um den Scheinwerfer (9) in Bezug auf das Karosserieelement (5) zu zentrieren und an seiner Position zu halten, einen flexiblen Arm (39) aufweisen, der nur an dem Strukturelement (27) und an dem Scheinwerfer (9) starr befestigt ist, wobei der Scheinwerfer (9) nur an dem flexiblen Arm (39) starr befestigt ist, wobei der flexible Arm (39) dazu ausgelegt ist, den Scheinwerfer (9) gegen eine Abstützzone (19) des Karosserieelements zu drängen (5).

2. Vorderbaugruppe nach Anspruch 1, **dadurch gekennzeichnet, dass** die Abstützzone (19) ein Rand der Öffnung (17) ist, wobei der Rand (19) der Öffnung (17) und der Scheinwerfer (9) dazu ausgelegt sind, zusammenzuwirken, um die Zentrierung des Scheinwerfers (9) in Bezug auf das Karosserieelement (5) unter der Wirkung der durch den flexiblen Arm (39) auf den Scheinwerfer (9) ausgeübten Belastung sicherzustellen.

3. Vorderbaugruppe nach Anspruch 1 oder 2, **dadurch gekennzeichnet, dass** das Karosserieelement (5) ein Kotflügel des Fahrzeugs ist.

4. Vorderbaugruppe nach Anspruch 3, **dadurch gekennzeichnet, dass** die Öffnung (17) durch einen Rand (19) mit geschlossenem Umriss begrenzt ist und vollständig in dem Karosserieelement (5) ausgebildet ist.

5. Vorderbaugruppe nach einem der Ansprüche 1 bis 4, **dadurch gekennzeichnet, dass** das Strukturelement (27) eine Querstrebe ist.

6. Vorderbaugruppe nach einem der Ansprüche 1 bis 5, **dadurch gekennzeichnet, dass** der flexible Arm (39) dazu ausgelegt ist, den Scheinwerfer (9) gegen die Abstützzone (19) des Karosserieelementes (5) mit einer Kraft zu drängen, die im Bereich von 5 bis 50 Newton liegt.
